# FASCICULE DE BREVET EUROPEEN

(11) **EP 0 482 972 B1**
(45) Date de publication et mention de la délivrance du brevet: **25.01.1995**
(21) Numéro de dépôt: 91402560.6
(22) Date de dépôt: 25.09.1991
(51) Int. Cl.: C03B 9/31, C03B 9/16

(54) **Procédé de fabrication d'articles en verre de plusieurs couleurs et articles obtenus par ce procédé**
Verfahren zur Herstellung von mehrfarbigen Glasgegenständen und die nach dem Verfahren hergestellten Gegenstände
Process for manufacturing multicoloured glass articles and articles obtained by this process

(30) Priorité: 19.10.1990 FR 9012995
(43) Date de publication de la demande: 29.04.1992
(73) Titulaire: VERRERIES DU COURVAL, F-76340 Blangy sur Bresle (FR)
(72) Inventeur: Colonna, Gabriel, c/o Verreries du Courval, F-76340 Blangy sur Bresle (FR)
(74) Mandataire: Lanceplaine, Jean-Claude

(56) Documents cités:
- DE-B- 2 421 699
- DE-C- 881 991
- US-A- 4 094 656

## Description

La présente invention concerne un procédé de fabrication d'articles en verre de plusieurs couleurs réparties de diverses façons.

La présente invention a également pour objet les articles obtenus par ce procédé.

On connaît dans le brevet US-A-4 094 656 un procédé de fabrication d'un article en verre qui consiste à introduire dans un moule ébaucheur une goutte de verre fondu, à préformer dans ce moule ébaucheur ledit article à partir de cette goutte, à transférer l'ébauche de l'article dans un moule finisseur et à former définitivement dans ce moule finisseur l'article.

On connaît également des procédés de fabrication d'articles comprenant plusieurs couches de verre de différentes couleurs dans lesquels on couvre une paraison d'une première couche de verre, puis d'une autre et ainsi de suite, et on façonne par pressage ou soufflage l'article souhaité.

Un autre procédé consiste à introduire une baguette de verre colorée au milieu d'une masse de verre, par exemple transparente, et à couper une paraison qui est ensuite façonnée pour obtenir un article.

Mais, avec ces procédés, on obtient des articles multicolore comportant des couches superposées de verre de différentes couleurs.

La présente invention a pour but de proposer un procédé de fabrication permettant d'obtenir des articles en verre tels que par exemple des bouteilles, des flacons, des gobelets, des verres, des vases, des cruches, des pichets ou encore des cendriers comportant des portions distinctes de différentes couleurs.

La présente invention a donc pour objet un procédé de fabrication d'un article en verre de plusieurs couleurs, consistant :
- à introduire successivement et de manière contrôlée dans un moule ébaucheur au moins deux gouttes de verre fondu à une température déterminée et de couleurs différentes, lesdites gouttes se superposant comme des paraisons dans le moule ébaucheur,
- à préformer dans ledit moule ébaucheur ledit article à partir desdites paraisons,
- à transférer ladite ébauche de l'article dans un moule finisseur,
- à former définitivement dans ledit moule finisseur ledit article comportant une juxtaposition distincte d'au moins deux portions de verre de couleurs différentes.

Selon des caractéristiques préférées :
- les températures desdites gouttes sont identiques,
- les températures desdites gouttes sont différentes pour favoriser la répartition des verres de couleurs différentes dans le moule ébaucheur,
- on matrice dans le moule ébaucheur la face supérieure de chaque paraison avant l'introduction de la paraison suivante,
- on introduit un insert dans le moule ébaucheur entre chaque paraison,
- après l'introduction desdites paraisons dans le moule ébaucheur et avant le préformage dudit article, on positionne ledit moule ébaucheur pour obtenir une juxtaposition desdites portions de verre de couleurs différentes dont les plans de jointure sont horizontaux dans l'article fini.
- après l'introduction desdites paraisons dans le moule ébaucheur et avant le préformage dudit article, on positionne horizontalement ledit moule ébaucheur pour obtenir une juxtaposition desdites portions de verre de couleurs différentes dont les plans de jointure sont verticaux dans l'article fini.
- après l'introduction desdites paraisons dans le moule ébaucheur et avant le préformage dudit article, on incline ledit moule ébaucheur pour obtenir une juxtaposition en diagonale desdites portions de verre de couleurs différentes.

La présente invention a également pour objet un article en verre de plusieurs couleurs obtenu par le procédé mentionné ci-dessus.

L'article en verre comporte une juxtaposition dans des plans horizontaux ou verticaux parallèles ou en diagonale d'au moins deux portions de verre de couleurs différentes.

Les caractéristiques et avantages apparaitront au cours de la description qui va suivre, donnée uniquement à titre d'exemple, faite en référence aux dessins annexés, dans lequels :
- la Fig. 1 est une vue schématique d'une partie d'une installation pour la mise en oeuvre du procédé selon l'invention,
- la Fig. 2 est une vue schématique en coupe de deux distributeurs de verre fondu de couleurs différentes,
- les Figs. 3a à 3d sont des vues schématiques montrant les différentes étapes de préformage d'un article dans un moule ébaucheur,
- la Fig. 4 est une vue schématique montrant le transfert de l'article entre le moule ébaucheur et un moule finisseur,
- les Figs. 5a à 5c sont des vues schématiques montrant les différentes étapes de formage définitif de l'article dans le moule finisseur,
- les Figs. 6a à 6i, sont des vues montrant les différentes variantes de flacons obtenus par le procédé selon l'invention.

Dans ce qui suit, l'installation pour la mise en oeuvre du procédé selon l'invention sera décrite pour la fabrication d'un article en verre par exemple un flacon bicolore.

Bien évidemment cette installation permet également la fabrication d'articles de formes diverses et comportant plus de deux couleurs.

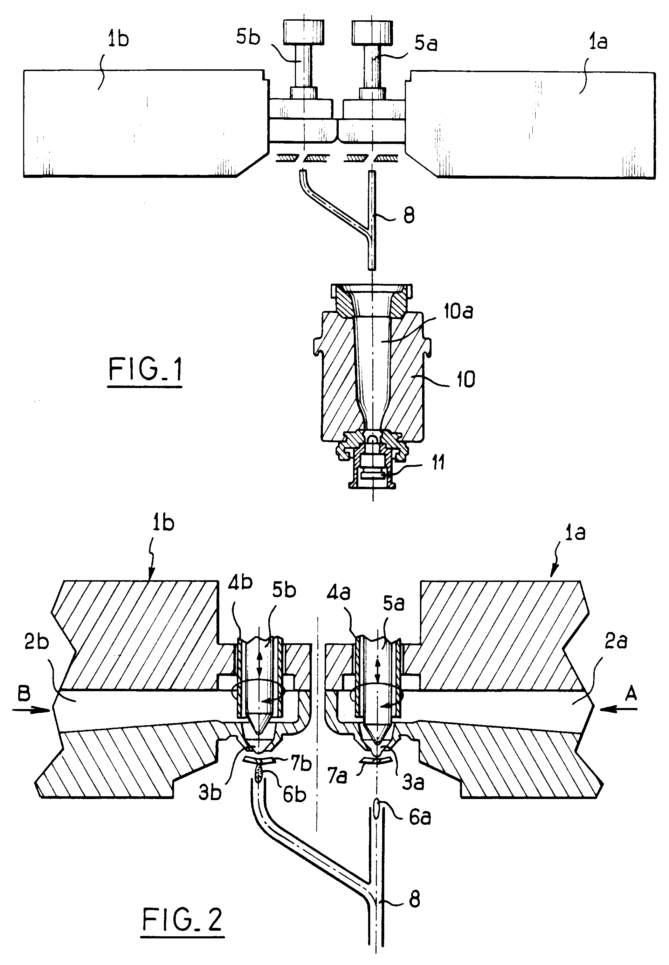

En se reportant aux Figs. 1 et 2, on voit que l'installation pour la mise en oeuvre du procédé comporte notamment deux distributeurs 1a et 1b de verre fondu de couleurs différentes A et B, placés chacun entre un four, non représenté, et un moule ébaucheur 10.

Comme représenté à la Fig. 2, le distributeur 1 comporte de façon classique un conduit d'alimentation 2a qui se termine par un orifice de coulée 3a disposé perpendiculairement audit conduit d'alimentation 2a.

Dans l'axe de cet orifice de coulée 3a, le distributeur la comporte une chemise rotative 4a et un poinçon 5a animé d'un mouvement alternatif.

La chemise 4a et le poinçon 5a délivrent, à la sortie de l'orifice de coulée 3a, une goutte 6a de couleur A qui est coupée par des ciseaux 7a.

La goutte 6a tombe alors dans un collecteur 8 qui la conduit dans le moule ébaucheur 10 comportant une empreinte 10a.

De manière identique, le distributeur 1b comporte un conduit d'alimentation 2b, un orifice de coulée 3b, une chemise rotative 4b et un poinçon 5b.

La chemise 4b et le poinçon 5b délivrent à la sortie de l'orifice de coulée 3b, une goutte 6b de couleur B qui est coupée par des ciseaux 7b.

La goutte 6b tombe également dans le collecteur 8 qui la conduit dans l'empreinte 10a du moule ébaucheur 10.

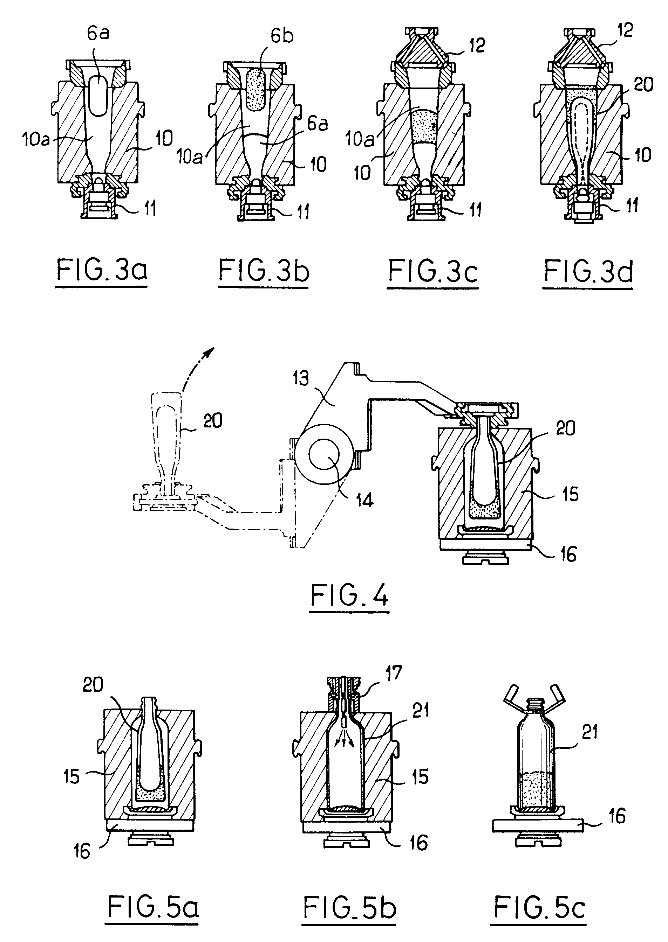

Comme représenté sur les Figs. 3a et 3b, les gouttes 6a et 6b tombent successivement dans l'empreinte 10a du moule ébaucheur 10 et se superposent les unes sur les autres.

Dans le cas où l'installation comporte plus de deux distributeurs de verre de couleurs différentes, les gouttes tombent également les unes après les autres dans le moule ébaucheur et se superposent comme des paraisons.

La formation de chaque goutte 6a et 6b est décalée de telle sorte que la seconde goutte 6b arrive dans le moule 10 après la première goutte 6a de façon controlée et guidée dans l'espace et dans le temps à un moment favorable à la mise en forme du flacon.

La température de chaque goutte 6a et 6b est controlée et ces gouttes peuvent avoir des températures identiques ou différentes pour favoriser la répartition des verres dans le moule ébaucheur 10 et rechercher des effets particuliers.

Le moule ébaucheur 10 comporte à sa partie inférieure une buse de soufflage 11 reliée à un dispositif d'alimentation en air sous pression non représenté.

Une fois les deux gouttes 6a et 6b introduites dans l'empreinte 10a du moule ébaucheur 10, on place, sur l'ouverture supérieure dudit moule ébaucheur, un couvercle 12 (Fig. 3c) permettant de façonner le fond du flacon et on souffle par la buse 11 de l'air sous pression (Fig. 3d).

Ainsi, on obtient une ébauche 20 du flacon comportant deux portions distinctes de verre de couleurs A et B différentes.

Ensuite, l'ébauche 20 est démoulée et transférée par un bras manipulateur 13 pivotant autour d'un axe 14 dans un moule finisseur 15 muni d'un fond amovible 16 (Fig. 4).

Lorsque l'ébauche 20 a été introduite dans le moule finisseur 15 (Fig. 5a), on monte sur la partie supérieure dudit moule finisseur une buse de soufflage 17 qui pénètre dans l'ébauche 20 et qui est reliée à un dispositif d'alimentation en air sous pression non représenté.

Après cette opération, on souffle dans l'ébauche 20 de l'air de façon à former définitivement le flacon 21 (Fig. 5b).

Le flacon 21 ainsi obtenu est démoulé du moule finisseur 15 en retirant le fond amovible 16 (Fig. 5c).

Le procédé selon l'invention permet donc d'obtenir des articles de formes diverses comme par exemple des flacons, des bouteilles, des gobelets, des verres, des vases, des cruches, des pichets ou encore des cendriers de plusieurs couleurs réparties de diverses façons.

Ainsi, le procédé permet de réaliser des articles comportant au moins deux portions de verre de couleurs différentes, le volume d'une couleur par rapport à l'autre pouvant varier de 20% à 80% ou de 80% à 20%.

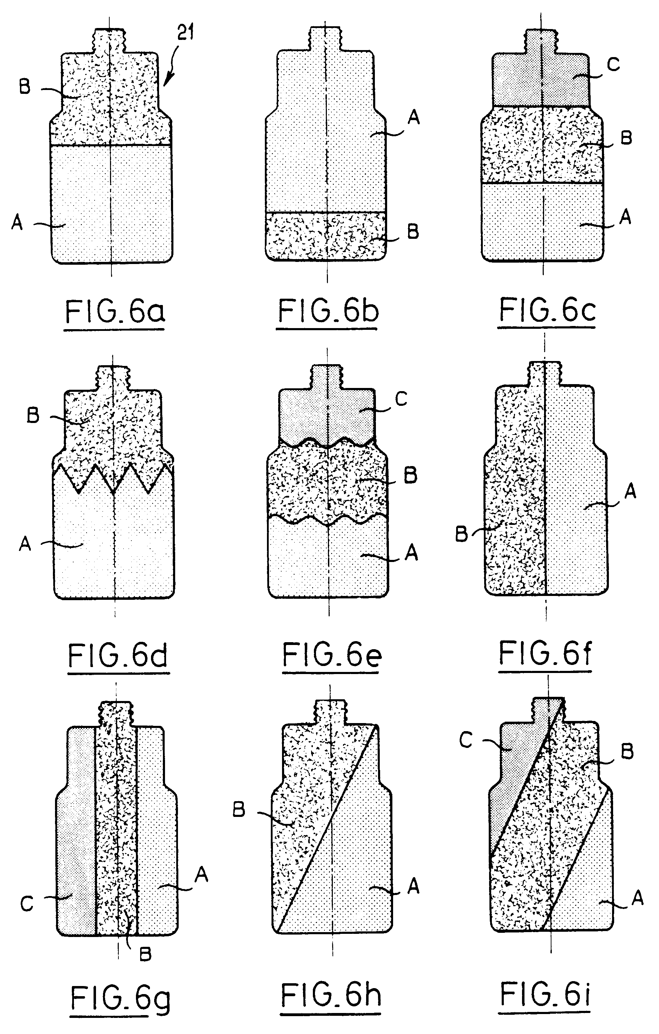

Les articles peuvent comporter une juxtaposition de deux portions de verre de couleurs différentes A et B dont la plan de joint est horizontal, comme par exemple, en bas la couleur A et en haut la couleur B (Fig. 6a) ou inversement (Fig. 6b) ou une juxtaposition horizontale de trois portions de verre de couleurs différentes A, B et C (Fig. 6c).

Dans ce cas, le moule ébaucheur 10 est positionné verticalement avant le préformage de l'article.

Selon une variante, la face supérieure de chaque goutte introduite dans le moule ébaucheur peut être matricer avant l'introduction de la goutte suivante pour obtenir entre chaque paraison une succession de parties en saillie et de creux (Fig. 6d) ou des ondulations (Fig. 6e).

Par ailleurs, un insert peut être introduit entre chaque paraison par exemple pour identifier l'article.

Selon une autre variante, les articles peuvent comporter une juxtaposition de deux portions de verre de couleurs différentes A et B dont le plan de joint est vertical, comme par exemple à droite la couleur A et à gauche la couleur B (Fig. 6f) ou inversement ou une juxtaposition verticale de trois portions de couleurs différentes A, B et C (Fig. 6g).

Pour obtenir ce genre d'articles, après l'introduction des gouttes dans le moule ébaucheur et avant le préformage, ce moule ébaucheur est positionné horizontalement.

Selon encore une autre variante, les articles peuvent comporter une juxtaposition en diagonale de deux portions de verre de couleurs différentes A et B (Fig. 6h) ou de trois portions de verre de couleurs différentes A, B et C (Fig. 6i).

Dans ce cas, le moule ébaucheur est incliné après l'introduction des gouttes et avant le préformage.

## Revendications

1. Procédé de fabrication d'un article (21) en verre de plusieurs couleurs (A, B, C...), consistant :
- à introduire successivement et de manière contrôlée dans un moule ébaucheur (10) au moins deux gouttes (6a, 6b...) de verre fondu à une température déterminée et de couleurs différentes (A, B, C...), lesdites gouttes (6a, 6b...) se superposant comme des paraisons dans le moule ébaucheur (10),
- à préformer dans ledit moule ébaucheur ledit article (21) à partir desdites paraisons (6a, 6b...),
- à transférer l'ébauche (20) de l'article (21) dans un moule finisseur (15, 16),
- à former définitivement dans ledit moule finisseur (15, 16) ledit article (21) comportant une juxtaposition distincte d'au moins deux portions de verre de couleurs différentes (A, B, C...).

2. Procédé selon la revendication 1, caractérisé en ce que les températures desdits gouttes (6a, 6b...) sont identiques.

3. Procédé selon la revendication 1, caractérisé en ce que les températures desdites gouttes (6a, 6b...) sont différentes pour favoriser la répartition des verres de couleurs différentes dans le moule ébaucheur (10).

4. Procédé selon la revendication 1, caractérisé en ce qu'on matrice dans le moule ébaucheur (10) la face supérieure de chaque paraison (6a, 6b...) avant l'introduction de la paraison suivante.

5. Procédé selon la revendication 1, caractérisé en ce qu'on introduit un insert dans le moule ébaucheur (10) entre chaque paraison (6a, 6b...).

6. Procédé selon l'une quelconque des revendications 1 à 5, caractérisé en ce qu'après l'introduction desdites paraisons (6a, 6b...) dans le moule ébaucheur (10) et avant le préformage dudit article (21), on positionne verticalement ledit moule ébaucheur (10) pour obtenir une juxtaposition desdites portions de verre de couleurs différentes dont les plans de jointure sont horizontaux dans l'article fini.

7. Procédé selon l'une quelconque des revendications 1 à 5, caractérisé en ce qu'après l'introduction desdites paraisons (6a, 6b...) dans le moule ébaucheur (10) et avant le préformage dudit article (21), on positionne horizontalement ledit moule ébaucheur (10) pour obtenir une juxtaposition desdites portions de verre de couleurs différentes dont les plans de jointure sont verticaux dans l'article fini.

8. Procédé selon l'une quelconque des revendications 1 à 5, caractérisé en ce qu'après l'introduction desdites paraisons (6a, 6b...) dans le moule ébaucheur (10) et avant le préformage dudit article (21), on incline ledit moule ébaucheur (10) pour obtenir une juxtaposition en diagonale desdites portions de verre de couleurs différentes.

9. Article en verre de plusieurs couleurs, caractérisé en ce qu'il est obtenu par le procédé selon l'une quelonque des revendications précédentes.

10. Article en verre selon la revendication 9, caractérisé en ce qu'il comporte une juxtaposition d'au moins deux portions de verre de couleurs différentes dont les plans de jointure sont horizontaux.

11. Article selon la revendication 9, caractérisé en ce qu'il comporte une juxtaposition d'au moins deux portions de verre de couleurs différentes dont les plans de jointure sont verticaux.

12. Article selon la revendication 9, caractérisé en ce qu'il comporte une juxtaposition en diagonale d'au moins deux portions de verre de couleurs différentes.

13. Article selon les revendications 9 et 10, caractérisé en ce qu'il comporte un insert entre chaque portion de verre de couleurs différentes.

## Claims

1. Process for manufacturing a glass article (21) having several colours (A, B, C ...), consisting of:
- successively and in a controlled manner, introducing into a preforming mould (10) at least two drops (6a, 6b ...) of molten glass at a given temperature and of different colours (A, B, C ...), the said drops (6a, 6b ...) being superimposed as parisons in the preforming mould (10),
- preforming the said article (21) in the said preforming mould from the said parisons (6a, 6b ...),
- transferring the preform (20) of the article (21) into a finishing mould (15, 16),
- finally forming, in the said finishing mould (15, 16), the said article (21) incorporating a distinct juxtaposition of at least two portions of glass of different colours (A, B, C ...).

2. Process according to Claim 1, characterised in that the temperatures of the said drops (6a, 6b ...) are identical.

3. Process according to Claim 1, characterised in that the temperatures of the said drops (6a, 6b ...) are different in order to assist the distribution of the glasses of different colours in the preforming mould (10).

4. Process according to claim 1, characterised in that the top face of each parison (6a, 6b ...) is pressed in the preforming mould (10) before the following parison is introduced.

5. Process according to Claim 1, characterised in that an insert is introduced into the preforming mould (10) between each parison (6a, 6b ...).

6. Process according to any one of claims 1 to 5, characterised in that, after the introduction of the said parisons (6a, 6b ...) into the preforming mould (10) and before the preforming of the said article (21), the said preforming mould (10) is positioned vertically in order to obtain a juxtaposition of the said portions of glass of different colours whose joint faces are horizontal in the finished article.

7. Process according to any one of Claims 1 to 5, characterised in that, after the introduction of the said parisons (6a, 6b ...) into the preforming mould (10) and before the preforming of the said article (21), the said preforming mould (10) is positioned horizontally in order to obtain a juxtaposition of the said portions of glass of different colours whose joint faces are vertical in the finished article.

8. Process according to any one of claims 1 to 5, characterised in that, after the introduction of the said parisons (6a, 6b ...) into the preforming mould (10) and before the preforming of the said article (21), the said preforming mould (10) is tilted in order to obtain a diagonal juxtaposition of the said portions of glass of different colours.

9. Glass article having different colours, characterised in that it is obtained by the process according to any one of the preceding claims.

10. Glass article according to claim 9, characterised in that it incorporates a juxtaposition of at least two portions of glass of different colours whose joint faces are horizontal.

11. Article according to claim 9, characterised in that it incorporates a juxtaposition of at least two portions of glass of different colours whose joint faces are vertical.

12. Article according to Claim 9, characterised in that it incorporates a diagonal juxtaposition of at least two portions of glass of different colours.

13. Article according to Claims 9 and 10, characterised in that it includes on insert between each portion of glass of different colours.

## Patentansprüche

1. Verfahren zur Herstellung eines Gegenstandes (21) aus Glas mit mehreren Farben (A, B, C, ...) mit den folgenden Schritten:
- aufeinanderfolgendes und kontrolliertes Einleiten wenigstens zweier bei einer bestimmten Temperatur geschmolzener und verschiedene Farben (A, B, C, ...) aufweisender Glastropfen (6a, 6b, ...) in eine Rohlingsform (10), wobei sich die Tropfen (6a, 6b, ...) in der Rohlingsform (10) als Rohlinge übereinanderlegen,
- Vorformen des Gegenstandes (21) aus den Rohlingen (6a, 6b, ...) in der Rohlingsform,
- Verbringen des Rohlings (20) des Gegenstandes (21) in eine Endform (15, 16),
- endgültiges Ausformen des Gegenstandes (21) in der Endform (15, 16), wobei der Gegenstand eine erkennbare Aneinanderlagerung wenigstens zweier Bereiche aus Glas unterschiedlicher Farbe (A, B, C, ...) aufweist.

2. Verfahren nach Anspruch 1, dadurch gekennzeichnet, daß die Temperaturen der Tropfen (6a, 6b, ...) identisch sind.

3. Verfahren nach Anspruch 1, dadurch gekennzeichnet, daß die Temperaturen der Tropfen (6a, 6b, ...) zur Unterstützung der Verteilung der jeweiligen unterschiedlichen Glasfarben in der Rohlingsform (10) unterschiedlich sind.

4. Verfahren nach Anspruch 1, dadurch gekennzeichnet, daß die Oberseite jedes Rohlings (6a, 6b, ...) vor dem Einleiten des nächsten Rohlings in der Rohlingsform (10) geprägt wird.

5. Verfahren nach Anspruch 1, dadurch gekennzeichnet, daß zwischen jeden Rohling (6a, 6b, ...) ein Einsatz in die Rohlingsform (10) eingesetzt wird.

6. Verfahren nach einem der Ansprüche 1 bis 5, dadurch gekennzeichnet, daß die Rohlingsform (10) nach dem Einbringen der Rohlinge (6a, 6b, ...) in die Rohlingsform (10) und vor dem Vorformen des Gegenstands (21) vertikal angeordnet wird, um ein Aneinanderliegen der Bereiche aus verschiedenfarbigem Glas zu erzielen, deren Grenzflächen im fertigen Gegenstand (21) horizontal verlaufen.

7. Verfahren nach einem der Ansprüche 1 bis 5, dadurch gekennzeichnet, daß die Rohlingsform (10) nach dem Einbringen der Rohlinge (6a, 6b, ...) in die Rohlingsform (10) und vor dem Vorformen des Gegenstands (21) horizontal angeordnet wird, um ein Aneinanderliegen der Bereiche aus verschiedenfarbigem Glas zu erzielen, deren Grenzflächen im fertigen Gegenstnd (21) vertikal verlaufen.

8. Verfahren nach einem der Ansprüche 1 bis 5, dadurch gekennzeichnet, daß die Rohlingsform (10) nach dem Einbringen der Rohlinge (6a, 6b, ...) in die Rohlingsform (10) und vor dem Vorformen des Gegenstands (21) schräg angeordnet wird, um ein diagonales Aneinanderliegen der Bereiche aus verschiedenfarbigem Glas zu erzielen.

9. Gegenstand aus mehrfarbigem Glas, dadurch gekennzeichnet, daß er nach dem Verfahren gemäß einem der vorhergehenden Ansprüche hergestellt ist.

10. Glasgegenstand nach Anspruch 9, dadurch gekennzeichnet, daß er wenigstens zwei aneinandergrenzende Bereiche aus Glas von unterschiedlicher Farbe aufweist, deren Grenzflächen horizontal verlaufen.

11. Gegenstand nach Anspruch 9, dadurch gekennzeichnet, daß er wenigstens zwei aneinandergrenzende Bereiche aus Glas von unterschiedlicher Farbe aufweist, deren Grenzflächen vertikal verlaufen.

12. Gegenstand nach Anspruch 9, dadurch gekennzeichnet, daß er wenigstens zwei diagonal aneinandergrenzende Bereiche aus Glas von unterschiedlicher Farbe aufweist.

13. Gegenstand nach den Ansprüchen 9 und 10, dadurch gekennzeichnet, daß er zwischen jedem der verschiedenfarbigen Glasbereiche einen Einsatz aufweist.
